# EUROPEAN PATENT SPECIFICATION

(11) **EP 2 333 895 B1**
(45) Date of publication and mention of the grant of the patent: **13.06.2012**
(21) Application number: 09460056.6
(22) Date of filing: 21.12.2009
(51) Int. Cl.: H01M 10/54

(54) **Method for desulphurization of battery paste**
Verfahren zur Entschwefelung von Batteriepaste
Procédé de désulfuration de pâte de batterie

(30) Priority: 23.11.2009 PL 38963909
(43) Date of publication of application: 15.06.2011
(73) Proprietor: Instytut Metali Niezelaznych, 44-100 Gliwice (PL); Orzel Bialy S.A., 41-902 Bytom (PL)
(72) Inventor: Szolomicki, Zbigniew, 44-100 Gliwice (PL); Chmielarz, Andrzej, 44-100 Gliwice (PL); Smieszek, Zbigniew, 44-100 Gliwice (PL); Myczkowski, Zbigniew, 44-121 Gliwice (PL); Mrozowski, Jan, 44-117 Gliwice (PL); Wasilewski, Wojciech, 44-100 Gliwice (PL); Leszek, Gotfryd, 44-100 Gliwice (PL); Prajsnar, Ryszard, 44-121 Gliwice (PL); Lucja, Buzek, 44-100 Gliwice (PL); Raszka, Urszula, 44-100 Gliwice (PL); Mulawa, Leszek, 44-100 Gliwice (PL)
(74) Representative: Maslowski, Andrzej

(56) References cited:
- EP-A1- 0 812 923
- WO-A1-2005/007904
- WO-A1-2008/087684

## Description

The invention relates to a method of desulphurizing battery paste in the process of recycling lead-acid batteries.

Spent lead-acid batteries are the main feedstock for the manufacture of lead and lead alloys. Battery scrap is subjected to initial mechanical processing, including comminution and component separation by various methods, as a result of which three main fractions of solid materials are obtained: metallic fraction, containing lead from electrode grids and poles; the so-called battery paste, containing active electrode material, which consists mainly of lead sulphate with small amount of metallic lead grains, lead(II) oxide and lead(IV) oxide; and plastic fraction, comprising casing and separator material, mainly polypropylene, polyethylene and polyvinyl chloride. Both lead-bearing fractions are processed metallurgically to obtain lead and/or lead alloys. Sulphur that is contained in the battery paste at concentrations of 5 to 8 % is a troublesome contaminant in the pyrometallurgical process, as it causes emissions to air of sulphur dioxide and requires the use of processing additives, such as iron scrap and soda ash, and consumes additional energy for transferring sulphur to FeS-Na₂S type slag and for slag melting. The said slag is a hazardous waste, which must be disposed of under special conditions, and is in addition a source of lead loss. For this reason the process of battery paste desulphurization is applied.

The commonly applied method of desulphurizing battery paste consists in leaching it with a solution of sodium carbonate or sodium hydroxide. The product obtained is a desulphurized paste, containing less than 1% of sulphur, and a solution of sodium sulphate, which is subsequently subjected to a technologically complex process of heavy metals removal. The treated solution is a source of crystalline anhydrous sodium sulphate, which is mainly used in the household chemicals industry, for instance in the manufacture of washing powders, and in the glass industry.

A method of metallurgical processing of the battery paste is also known, wherein during lead smelting, upon the action of additives, sulphur is bound to slag, which is a waste that must be disposed of under special conditions.

The use of amines in the manufacture of lead is known from patent specification SU 619532. According to the disclosed method for obtaining lead, the lead-bearing feedstock is subjected to sulphatizing roasting, and after washing out salts of zinc, iron, copper and other metals, the remainder is leached with an aqueous solution of ethylenediamine (EDA). The precipitation of lead from the leach solution is carried out using SO₃ or SO₂ or a mixture thereof, and lead in the form of PbSO₄ is further processed metallurgically using known methods. The spent leach solution is regenerated with calcium hydroxide in the presence of excess SO₃ and/or SO₂, in an amount not exceeding 0.5 - 2 g/dm³, at pH 10, wherein the produced calcium sulphite and calcium sulphate form a precipitate. The regenerated solution of the amine (EDA), which contains lead at a concentration not exceeding 1-3 g/dm³, is recycled in the process.

A battery paste processing method is also known from patent specification BG 62098, wherein the paste desulphurizing step is carried out in an aqueous solution of diethylenetetramine (DETA) with a concentration of 80-150 g/dm³ at a temperature of 18 - 25°C. The solid phase separated by filtration is subjected to a pyrometallurgical process to recover lead, while the solution is saturated with carbon dioxide and filtered to provide a solid product in the form of lead(II) carbonate. The solution, after degassing, is regenerated with soda lye or KOH. After crystallization and filtration, sodium or potassium sulphate is obtained from the solution whereas the regenerated solution of the amine (DETA) is recycled to the process.

The method of battery paste desulphurization according to the invention consists in extracting lead(II) sulphate contained in the battery paste with a circulating aqueous solution of a polyamine, preferably triethylenetetramine (TETA) or a mixture of TETA with other polyamines, the said solution being subjected to regeneration with Ca(OH)₂. The method is characterized in that the process of battery paste leaching with a circulating aqueous solution of a polyamine, preferably triethylenetetramine (TETA) or a mixture of TETA with other polyamines, mainly ethylenediamine (EDA), diethylenetriamine (DETA), tetraethylenepentamine (TEPA), is carried out simultaneously with saturation of the solution with carbon dioxide, after which lead(II) carbonate and other non-leachable constituents of the battery paste are removed by filtration from the suspension obtained, preferably on a pressure filter enabling washing of the filter cake with water, while the filtrate and washings are fed to an acidification reactor, where sulphuric acid is used to remove the excess absorbed carbon dioxide and the remainder of lead in the form of lead (II) sulphate, which after filtration, preferably on a pressure filter, is recycled to the paste leaching process. The solution obtained is regenerated, preferably in a continuous crystallizer, with a suspension of calcium hydroxide produced from the circulating aqueous solution and hydrated or burnt lime, whereas the regeneration process yields gypsum and regenerated circulating solution.

The circulating solution, upon adjusting its concentration by adding appropriate polyamine or a mixture of polyamines, is fed to a process for removing the remainder of calcium. At this stage the solution is saturated with carbon dioxide until an overpressure, preferably of 200 mbar, is attained in the closed reactor, and thereupon the obtained calcium carbonate suspension is filtered. The concentration of the solution from the saturation operation is, when necessary, adjusted by adding appropriate polyamine or a mixture of polyamines, whereas the calcium carbonate obtained in the process is fed to a reactor where a process of battery electrolyte neutralization is conducted. The product of battery electrolyte neutralization, gypsum, is filtered.

The fraction of TETA in the circulating solution of a polyamine or of a mixture of polyamines is preferably 2% to 15%.

In one embodiment of the invention the method of battery paste desulphurization consists in extracting lead(II) sulphate contained in the battery paste with a circulating aqueous solution of a polyamine, preferably triethylenetetramine (TETA), or a mixture of polyamines, said solution subjected to regeneration with Ca(OH)₂, wherein the process is conducted in such manner that the battery paste is leached with aqueous circulating solution of a polyamine, preferably triethylenetetramine (TETA) or a mixture of TETA with other polyamines, mainly ethylenediamine (EDA), diethylenetriamine (DETA), tetraethylenepentamine (TEPA), while simultaneously saturating the solution with carbon dioxide. Lead(II) carbonate and other non-leachable constituents of the battery paste are removed from the obtained suspension by filtration, preferably on a pressure filter enabling washing of the filter cake with water, while the filtrate and washings are fed to a crystallizer for regeneration thereof with calcium hydroxide and formation of calcium sulphate and carbonate as a mixed product CaSO₄·CaCO₃·xH₂O, and the remaining solution, after adjusting its concentration by addition of appropriate polyamine or a mixture of polyamines, is recycled to the circulating solution. The mixed product CaSO₄·CaCO₃·xH₂O is preferably fed to a reactor for gypsum production, where it is upgraded by decomposing CaCO₃ with H₂SO₄ and/or battery electrolyte and subsequently filtered, preferably on a pressure filter, to obtain gypsum and wastewater.

The circulating solution, after adjustment of its concentration by adding appropriate polyamine or a mixture of polyamines, is subjected to an operation of removing remaining calcium. At this stage the solution is saturated in a closed reactor with carbon dioxide until an overpressure, preferably of 200 mbar, is attained, and thereupon the obtained calcium carbonate suspension is filtered. The concentration of the solution from the saturation operation is, when necessary, adjusted by adding appropriate polyamine or a mixture of polyamines and returned to circulation, whereas the calcium carbonate obtained in the process is fed to the reactor for gypsum production.

The use of the solution of an aliphatic polyamine in the desulphurization of the battery paste consists in taking advantage of the extractive capabilities of the said polyamine in relation to solid lead(II) sulphate (PbSO₄). During the contact of both phases, an amine/PbSO₄ complex forms in the aqueous phase, from which lead is thereafter separated in the form of lead(II) carbonate by acting upon it with carbon dioxide.

After separation of phases, during subsequent operation, the amine regeneration process is effected, wherein gypsum is produced by the action of calcium hydroxide.

The process of battery paste desulphurization is illustrated by the following reactions:

aqueous solution of amine/CO₃²⁻ + PbSO₄ (contained in paste) → [amine-PbSO₄] + PbCO₃↓ (1)

[amine-PbSO₄] + CO₂ → PbCO₃↓ + [amine-SO₄²⁻-CO₃²⁻ -Pb²⁺] (2)

[amine-SO₄²⁻-CO₃²⁻-Pb²⁺] + H₂SO₄ → PbSO₄↓ + CO₂↑ + [amine- SO₄²⁻] (3)

[amine-SO₄²⁻] + Ca(OH)₂ → CaSO₄·2H₂O↓ + [amine-Ca²⁺] (4)

[amine-Ca²⁺] + CO₂ → CaCO₃↓ + aqueous solution of amine/CO₃²⁻ (5)

Other sequence of process operations is also possible.

The method disclosed herein enables recycling spent active components of lead-acid batteries in a virtually waste-free process by obtaining a processed paste of low sulphur content and increased lead content, the said paste being thereafter smelted to obtain lead in an environmentally-safe way. The paste obtained by the method according to the invention, when used in the lead manufacturing process, causes in comparison to traditional smelting an about threefold reduction of the quantity of slag formed in the process. Moreover, the method according to the invention provides gypsum of low moisture content, practically up to 10%, which makes the gypsum applicable in the manufacture of building materials, e.g. cement.

The method of battery paste desulphurization according to the invention is presented here in exemplary embodiments, which do not exhaust all possibilities of process implementation according to the invention.

### Example 1

A saturator reactor with a capacity of 6.5 m³, fitted with a cooling jacket and a finger-type agitator with a duct along the shaft axis for feeding carbon dioxide gas, was fed with 5.0 m³ of circulating solution of TETA (concentration 61.4 g/dm³, temperature 50°C, pH 11.5) and with carbon dioxide gas until an overpressure of 200 mbar was reached. Saturation is an exothermic process, therefore when temperature had exceeded 55°C, the system was jacket-cooled. When saturation was completed and pressure was reduced to atmospheric pressure, the resulting suspension was filtered on a pressure filter press to obtain a) 37.36 kg of wet calcium carbonate with moisture content of 25%, and b) filtered solution. The solution was fed to a leaching reactor, made up with 12.0 dm³ of concentrated amine (TETA) to maintain the initial concentration of the circulating solution (62.5 g/dm³) and, while continuously agitating the contents of the reactor, 1.11 Mg of battery paste with moisture content of 10% was introduced.

After leaching of the paste was completed, the suspension was filtered on a pressure filter press, the filter cake was washed on the filter press with 41 dm³ of water, which was combined with basic filtrate, to obtain a) 1.08 Mg of desulphurized paste with moisture content of 12% and sulphur content <0.5%, and b) filtrate, which was collected in an acidification reactor.

The acidification reactor containing the filtrate, while continuously agitating the contents of the reactor, was fed with 50 dm³ of concentrated sulphuric acid, which was introduced below the liquid surface, to remove excess CO₂ gas and the remaining lead by converting it to PbSO₄, and the suspension was filtered by pressure filtration to obtain a) 11.76 kg of precipitate with moisture content of 15%, which was returned to the process of paste leaching, and b) filtrate, which was transferred to a buffer tank, and from there to an amine regeneration reactor.

Regeneration of the filtrate/solution after acidification was carried out in continuous manner in a crystallizer reactor with a capacity of 3 m³. The crystallizer was fed, under constant flow rate, with a) a suspension of calcium hydroxide obtained from a portion of the circulating solution after regeneration (1m³) and from hydrated lime in an amount of 209 kg, and b) the filtrate/solution after acidification, to obtain thereby, in a continuous process, a gypsum suspension, which was collected in a buffer tank, and subsequently transferred periodically to a pressure filter, and the gypsum was washed on the filter with 41 dm³ of water. Thus, 0.48 Mg of gypsum with moisture content of 10% and calcium carbonate content of less than 2% was obtained.

### Example 2

A leaching-saturation vessel with a capacity of 6.5 m³, fitted with a cooling jacket and a finger-type agitator with a duct along the shaft axis for feeding carbon dioxide gas, was fed with 5.0 m³ of circulating solution of amine (TETA) (concentration 6.13%, temperature 50°C, pH 11.5) and, while continuously agitating the contents of the vessel, with 1.11 Mg of paste with moisture content of 10%.

After completion of leaching, carbon dioxide gas was fed to the suspension obtained and the process of saturation was started and was continued until an overpressure of 200 mbar was reached. Saturation is an exothermic process, therefore when temperature had exceeded 55°C the system was jacket-cooled.

After saturation was completed and pressure was reduced to atmospheric pressure, the suspension obtained of the desuphurized paste was filtered on a pressure filter press, the filter cake was washed with 34 dm³ of water to obtain a) 1.08 Mg of paste with moisture content of 12% and sulphur content <0.5%, and b) filtrate, which was collected in a regeneration reactor.

The regeneration reactor with a capacity of 3 m³, operating in a continuous mode, was fed, under constant flow rate, with a) a suspension of calcium hydroxide obtained from a portion of the circulating solution after regeneration (1m³) and from hydrated lime in an amount of 140 kg, and b) filtrate and washings from the previous operation, to obtain thereby, in a continuous process, a suspension of a mixture of gypsum and calcium carbonate CaSO₄·CaCO₃·xH₂O, which was collected in a buffer tank, and subsequently transferred periodically to a pressure filter, and the gypsum was washed on the filter with 34 dm³ of water. Thus, 0.41 Mg of gypsum with moisture content of 12% and calcium carbonate content of 12.14 % was obtained.

The filtrate and washings regenerated in the regeneration reactor, after adjusting the concentration of polyamine, was returned to subsequent leaching cycle.

In order to remove carbonates from the obtained mixture of gypsum and calcium carbonate, said mixture was mixed with water to attain a concentration of 400 kg/m³, heated to 55°C and admixed with waste battery acid while continuously agitating the suspension until pH of 2.5 was attained. The resulting gypsum suspension of low carbonate content was pressure-filtered to obtain 0.39 Mg of gypsum with moisture content of 10% and CaCO₃ content of 2%. The solution from gypsum filtration is a waste, which is transferred to industrial wastewater treatment plant.

## Claims

1. Method for desulphurization of battery paste using a circulating aqueous solution of polyamines, wherein the paste desulphurization step is carried out in an aqueous solution of a defined amine and wherein the said solution is saturated with carbon dioxide resulting in a solid product, which is separated by filtration, and the solution is regenerated and the regenerated amine solution is returned to the process, **characterized in that** the circulating solution of the polyamine or of a mixture of polyamines is saturated with carbon dioxide to remove the remainder of calcium from the solution and then filtered to isolate precipitated calcium carbonate, preferably by using pressure filtration, thereafter the battery paste is leached with the thus obtained circulating aqueous solution of the polyamine or of a mixture of polyamines followed by filtration of the suspension obtained, preferably by using pressure filtration and washing on the filter to obtain a desulphurized paste of low sulphur content and circulating solution, the said solution being regenerated by removing therefrom the remainder of lead and carbon dioxide by acting upon it with sulphuric acid and then filtered to separate lead sulphate and recycled to the basic process, whereas the obtained circulating amine solution containing sulphate ions is regenerated with calcium hydroxide in a crystallizer to obtain a gypsum suspension, which is separated preferably by pressure filtration and washed on the filter to produce gypsum and circulating solution, the concentration of the polyamine or of the mixture of polyamines in the solution being adjusted by admixing a new portion of the polyamine or of the mixture of polyamines, and the adjusted solution being returned to the start of the process.

2. Method according to claim 1, **characterized in that** the saturation with carbon dioxide of the circulating aqueous solution of the polyamine or of the mixture of polyamines is carried out both prior to battery paste leaching, as well as during and/or after the process of battery paste leaching.

3. Method according to claim 1, **characterized in that** the regeneration process of the polyamine or of the mixture of polyamines using a calcium hydroxide suspension is carried out in a gypsum crystallizer in a continuous or batch process.

4. Method according to claim 1, **characterized in that** the regeneration process of the circulating amine solution, consisting in the removal therefrom of sulphate and carbonate ions, is carried out on the solution after leaching the battery paste by acting upon it with a calcium hydroxide suspension obtained from the circulating solution and hydrated lime or burnt lime.

5. Method according to claims 1 and 4, **characterized in that** the process of removing carbonate ions from the circulating amine solution is effected by co-precipitation of carbonates in the form of a mixed product CaSO₄·CaCO₃·xH₂O, whereas gypsum is separated in pure form in subsequent operation of calcium carbonate dissolution with sulphuric acid.

6. Method according to claim 1, **characterized in that** the circulating solutions are solutions of a polyamine or of a mixture of polyamines, wherein the fraction of triethylenetetramine (TETA) is 2% to 15%.

## Patentansprüche

1. Die Entschwefelungsmethode der Batteriepaste bei der Verwendung eines Umlaufwasserlösung der Polyamine, in der man die Entschwefelungsphase der Paste in einer Wasserlösung eines bestimmten Amins durchführt, wobei die Lösung mit dem Kohlendioxid gesättigt wird, wobei man nach der Filtration ein festes Produkt erhält und die Lösung regeneriert wird, die regenerierte Aminlösung wird zu dem Verfahren zurückgeführt, **dadurch gekennzeichnet, dass** die Umlauflösung des Polyamins oder der Polyaminmischung für die Beseitigung der Kalkreste aus der Lösung mit dem Kohlendioxid gesättigt wird, dann wird das Calciumcarbonat filtriert und abgesondert, vorzugsweise mit Anwendung einer Druckfiltration, dann wird die Batteriepaste mit der auf solche Weise vorbereiteten Lösung des Polyamins oder der Polyaminmischung gelaugt und nach der Beendigung der Laugung wird die Suspension gefiltert, vorzugsweise mit Anwendung einer Druckfiltration und Spülen auf dem Filter, mit dem Erhalten einer entschwefelten Paste mit einem niedrigen Gehalt von Schwefel und Umlauflösung, welche dann durch eine vorbereitende Beseitigung der Bleireste und des Kohlendioxides mit Schwefelsäure regeneriert wird, dann wird sie für die Absonderung des Bleisulfats und Bleis filtriert und zu dem Grundverfahren zurückgeführt und auf solche Weise erhaltene Aminlösung mit Sulfationen wird mit Calciumhydrocid im Kristallisierapparat regeneriert, wobei man eine Gipssuspension erhält, die vorzugsweise durch die Anwendung der Druckfiltration mit dem Spülen auf dem Filter verteilt, wobei man Gips und Umlauflösung erhält, worauf die Konzentration des Polyamins oder der Polyaminmischung in der Lösung korrigiert wird indem man in die Lösung eine neue Dosis des Polyamins oder der Polyaminmischung zugibt und die auf solche Weise korrigierte Lösung zum Verfahrensanfang zurückgeführt wird.

2. Verfahren gemäss Anspruch 1, **dadurch gekennzeichnet, dass** die Sättigung des wässerigen Lösung des Polyamins oder der Polyaminmischung mit dem gasformigen Kohlendioxid sowohl vor der Laugung der Batteriepaste, als auch während und/oder nach dem Laugenprozess der Batteriepaste durchgeführt wird.

3. Verfahren gemäss Anspruch 1, **dadurch gekennzeichnet, dass** das Regenerationsverfahren des Polyamins oder der Polyaminmischung mit Anwendung der Suspension des Calciumhydroxids in einem Kristallisierapparat für den Gips in einem permanenten oder periodischen Verfahren realisiert wird.

4. Verfahren gemäss Anspruch 1, **dadurch gekennzeichnet, dass** das Regenerationsverfahren der Umlauflösung des Amins durch die Beseitigung der Sulfat- und Carbonationen aus der Lösung nach der Laugung der Batteriepaste durch die Suspension des Calciumhydroxides, erstellt auf der Umlauflösung und aus dem hydratisierten oder gebrannten Kalk stattfindet.

5. Verfahren gemäss Anspruch 1 und 4, **dadurch gekennzeichnet, dass** das Verfahren der Beseitigung der Carbonationen aus der Umlauflösung des Amins durch eine gemeinsame Absonderung der Carbonate in der Form eines gemischten Produktes CaSO₄·CaCO₃·xH₂O, mit Absonderung des Gipses in einer reinen Form in der folgenden technologischen Operation durch den Aufschluss des Calciumcarbonats mit der Schwefelsäure realisiert wird.

6. Verfahren gemäss Anspruch 1, **dadurch gekennzeichnet, dass** die Umlauflösungenwässerige Lösungen des Polyamines oder der Polyaminmischung sind , in der der Anteil von TETA von 2 % bis 15% beträgt.

## Revendications

1. La méthode de désulfuration de la pâte des accumulateurs avec l'utilisation de solution aqueuse de circulation de polyamines dans laquelle la phase de désulfuration de la pâte est menée dans la solution aqueuse de l'amine déterminée, mais la solution est soumise à la saturation de dioxyde de charbon, suite à quoi on obtient après la filtration un produit solide, et la solution est soumise à l'activation; par contre, la solution activée d'amines est retournée au processus, qui se **caractérise par** ce que la solution de circulation de polyamine ou le mélange de polyamines se sature par dioxyde de charbon pour éliminer les résidus de chaux dans la solution, et ensuite on filtre et sépare le carbonate de calcium précipité avantageusement avec l'utilisation de filtration à pression, suite à quoi on lessive la pâte des accumulateurss avec ainsi préparée solution aqueuse de circulation de polyamine ou de mélange de polyamines, et une fois terminé le lessivage, on filtre la suspension avantageusement avec l'utilisation de filtration à pression et le lavage au filtre avec lobtention de pâte désulfurée à une faible contenance de sulfre et de solution de circulation qui est soumisé à l'activation par l'élimination préliminaire de cette solution de résidus de plomb et de dioxyde de charbon par action d'acide sulfurique, et ensuite on filtre pour séparer le sulfure de plomb et on retourne au processus de base; par contre, la solution de circulation d'amine obtenue, qui contient des ions sulfates, est soumise à l'activation par hydroxyde de calcium dans le catalyseur, suite à quoi on obtient une suspension de plâtre séparée avantageusement par l'utilisation de filtration à pression avec le lavage au filtre en obtenant le plâtre et la solution de circulation, après quoi on corrige la concentration de polyamine ou du mélange de polyamines dans la solution par l'ajout à la solution d'une nouvelle dose de polyamine ou de mélange de polyamines, et la solution ainsi corrigée retourne au début du processus.

2. La méthode selon la réserve 1, qui se **caractérise par** ce que la saturation de solution aqueuse de circulation de polyamine ou de mélange gazeux de polyamines par dioxyde de charbon est menée aussi bien avant le lessivage de la pâte des accumulateurs qu'au cours et / ou après le processus de lessivage de la pâte des accumulateurs.

3. La méthode selon la réserve 1, qui se **caractérise par** ce que le processus d'activation de polyamine ou du mélange de polyamines avec l'utilisation de suspension d'hydroxyde de calcium est réalisé dans un catalyseur de plâtre dans le processus continu ou périodique.

4. La méthode selon la réserve 1, qui se **caractérise par** ce que le processus d'activation de circulation de solution d'amine par en éliminer des ions sulfates et carbonates se fait de la solution après le lessivage de la pâte des accumulateurs par action de la suspension d'hydroxyde de calcium préparée de solution de circulation et de chaux hydratée ou de chaux vive.

5. La méthode selon les réserves 1 et 4, qui se **caractérise par** ce que le processus d'élimination d'ions carbonates de la solution de circulation d'amine est réalisée à l'aide du dégagement commun de carbonates sous forme du produit mélangé CaSO₄·CaCO₃·xH₂O, avec le dégagement de plâtre en pure forme dans l'opération suivante du procède à travers le recuit de mise en solution de carbonate de calcium par acide sulfurique.

6. La méthode selon la réserve 1, qui se **caractérise par** ce que les solutions sont celles aqueuses de polyamine ou de mélange de polyamines dans lesquelles la participation de triéthyléno-tetraamine (TETA) est de 2 % à 15%.
